# EUROPEAN PATENT SPECIFICATION

(11) **EP 4 391 099 B1**
(45) Date of publication and mention of the grant of the patent: **29.04.2026**
(21) Application number: 23785028.4
(22) Date of filing: 06.04.2023
(51) Int. Cl.: H01M 4/04, H01M 4/139, B01D 29/11, B01D 29/52

(54) **SLURRY FILTERING DEVICE**
SCHLAMMFILTERVORRICHTUNG
DISPOSITIF DE FILTRATION DE SUSPENSION

(30) Priority: 07.04.2022 KR 20220043450
(43) Date of publication of application: 26.06.2024
(73) Proprietor: LG Energy Solution, Ltd., Seoul 07335 (KR)
(72) Inventor: KIM, Ki-Deok, Daejeon 34122 (KR); KANG, Dae-Ho, Daejeon 34122 (KR); PARK, Sang-Hyun, Daejeon 34122 (KR); LEE, Je-An, Daejeon 34122 (KR)
(74) Representative: Hoffmann Eitle
(86) International application number: PCT/KR2023/004676
(87) International publication number: WO 2023/195804

(56) References cited:
- JP-A- H11 104 412
- JP-B2- 4 260 246
- KR-A- 20110 042 625
- KR-A- 20210 145 070
- US-A- 6 027 647
- US-A- 6 080 313
- US-A1- 2002 023 865
- US-A1- 2002 158 001
- US-A1- 2003 136 715
- US-A1- 2021 308 604

## Description

### TECHNICAL FIELD

The present disclosure relates to a slurry filtering device, and more particularly, to a slurry filtering device with improved filtering efficiency.

### BACKGROUND ART

With the technology development and growing demand for mobile devices, the demand for secondary batteries as an energy source is sharply increasing, and a secondary battery essentially comprises an electrode assembly as a power generation element.

The electrode assembly may be formed into a predetermined shape by coating an electrode active material slurry on a positive electrode current collector and a negative electrode current collector to manufacture a positive electrode and a negative electrode, and stacking the positive electrode and the negative electrode on two sides of a separator. Additionally, the secondary battery may be formed by receiving the electrode assembly in a battery case, injecting an electrolyte and sealing up.

The separator that constitutes a part of the electrode assembly may be formed by coating a coating slurry containing a mixture of a polymer binder, a dispersant, heat resistant filters or the like on one or two surfaces of a substrate.

The separator may be coated with a coating material having an adhesive strength on the surface. In this instance, the coating material may be a mixture of inorganic particles and a binder polymer. Here, the inorganic particles may improve thermal safety of the separator. That is, the inorganic particles may prevent the separator from shrinking at high temperature. Additionally, the binder polymer may immobilize the inorganic particles. By the inorganic particles, a coating layer on the separator surface may have a predetermined pore structure. The pore structure may allow ions to smoothly move from the positive electrode to the negative electrode though the inorganic particles are coated on the separator. Additionally, the binder polymer may stably hold the inorganic particles onto the separator, thereby improving mechanical stability of the separator. Further, the binder polymer may adhere the separator to the electrode more stably (such a coating is referred to as Safety Reinforced Separator (SRS) coating).

To stably manufacture the separator, a slurry filtering device is used to remove impurities or macroparticles from the slurry when preparing the coating slurry.

The slurry filtering device needs one filter in one housing, and in case that different types of filters are connected in series, it is necessary replace and clean the filter for each housing, causing inconvenience, resulting in low work efficiency.

US 2002/023865 A1 relates to a multi-element filtering system assuring serial filtration of a liquid through multiple filter cartridges while enabling flushing without requiring removal of the filter cartridges.

### DISCLOSURE

### Technical Problem

The present disclosure is designed to solve the above-described problem, and therefore the present disclosure is directed to providing a slurry filtering device with improved slurry filtering efficiency.

However, the technical problem of the present disclosure is not limited to the above-described problem, and these and other problems will be clearly understood by those skilled in the art from the following description.

### Technical Solution

The present invention is defined by the slurry filtering device according to independent claim 1. Other preferred features are recited in the dependent claims. A slurry filtering device according to an embodiment of the present disclosure includes a housing including a slurry accommodation portion inside to which a slurry is supplied, a plurality of filters received respectively in a plurality of divided spaces of the slurry accommodation portion and configured to filter at least some of particles in the slurry, and a slurry transport line connecting the plurality of divided spaces to supply the slurry to each divided space in a sequential order.

Preferably, the plurality of divided spaces may be hermetically separated by a plurality of partitions.

Preferably, the housing may further include a slurry transport line accommodation portion at a side of the slurry accommodation portion, the slurry transport line accommodation portion accommodating the slurry transport line in a space that is separated from the slurry accommodation portion.

The divided space of the slurry accommodation portion at an exit of the slurry transport line is surrounded by the other divided spaces of the slurry accommodation portion.

The divided space of the slurry accommodation portion at the exit of the slurry transport line is disposed at a center of the slurry accommodation portion.

Preferably, the plurality of filters may have different pore sizes.

Preferably, the pore size of the plurality of filters may decrease as it goes from an entrance of the slurry transport line to an exit of the slurry transport line.

Preferably, the slurry transport line may include an entrance line connecting a slurry supply portion to the divided space of the slurry accommodation portion at an entrance of the slurry transport line, an exit line connecting a slurry discharge container to the filter at an exit of the slurry transport line, and a connection line disposed in the slurry transport line accommodation portion, the connection line connecting the plurality of divided spaces.

Preferably, the connection line may be configured to connect the filter received in one divided space to a side of the adjacent other divided space.

Preferably, the slurry filtering device may further include a pressure adjustment portion configured to individually adjust a pressure in the plurality of divided spaces.

### Advantageous Effects

According to an embodiment of the present disclosure, since the plurality of filters is received in independent spaces within the limited space, and each filter is connected in series to filter the slurry in a sequential order, it may be possible to increase the slurry filtering time and improve the slurry filtering efficiency.

Additionally, according to an embodiment of the present disclosure, since the slurry transport line and the filters are disposed in independent spaces, it may be possible to prevent a decrease in slurry filtering effect caused by interferences of the slurry transport line and the filters.

Additionally, according to an embodiment of the present disclosure, it may be possible to apply multiple filters in the limited space and form a more compact structure.

Additionally, according to an embodiment of the present disclosure, since the plurality of filters has different pore sizes, it may be possible to improve durability of the filter.

Additionally, according to an embodiment of the present disclosure, it may be possible to filter macroparticles in the slurry at the divided space of the slurry accommodation portion at the entrance of the slurry transport line of the highest slurry supply pressure.

Additionally, according to an embodiment of the present disclosure, since the remaining filter except the filter at the entrance of the slurry transport line has a smaller pore size, it may be possible to improve the durability of the filter and reduce the time required to replace the filter.

These and other effects may be achieved by the embodiments of the present disclosure. The effects of the present disclosure will be described in detail in each embodiment, or a description of effects that can be easily understood by those skilled in the art is omitted.

### DESCRIPTION OF DRAWINGS

The accompanying drawings illustrate an exemplary embodiment of the present disclosure and together with the foregoing disclosure, serve to provide further understanding of the technical aspect of the present disclosure, and thus, the present disclosure is not construed as being limited to the drawings.
FIG. 1 is a diagram showing a slurry filtering device according to an embodiment of the present disclosure.
FIG. 2 is a projection of the slurry filtering device of FIG. 1.
FIG. 3 is a top view of the slurry filtering device of FIG. 2.
FIG. 4 is a bottom view of the slurry filtering device of FIG. 2.
FIG. 5 is a diagram exemplarily showing a filter of the slurry filtering device of FIG. 2.
FIG. 6 is a diagram schematically showing slurry filtering in the slurry filtering device of FIG. 2.
FIG. 7 is a diagram showing a slurry flow pathway in the slurry filtering device of FIG. 2.
FIG. 8 is a diagram showing a slurry filtering device according to another embodiment of the present disclosure.
FIG. 9 is a diagram showing a slurry filtering device according to still another embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to technical aspects of the present disclosure on the basis of the principle that the inventor is allowed to define terms appropriately for the best explanation.

Therefore, the embodiments described herein and the illustration in the drawings are provided by way of illustration to describe the technical aspect of the present disclosure and not intended to be limiting, so it should be understood that a variety of equivalents and modifications could have been made thereto at the time that the application was filed.

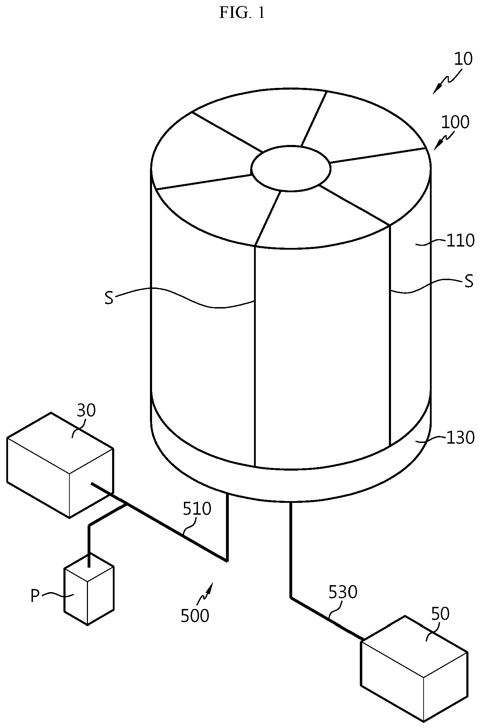

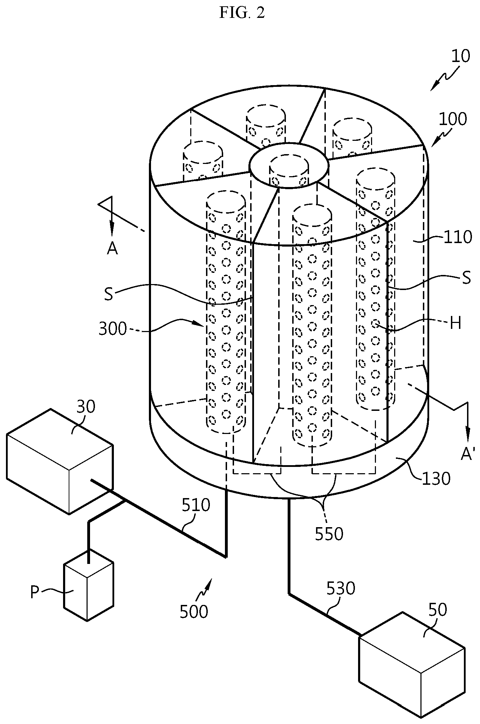

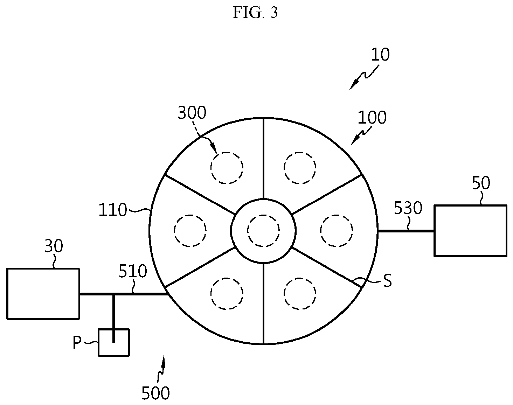

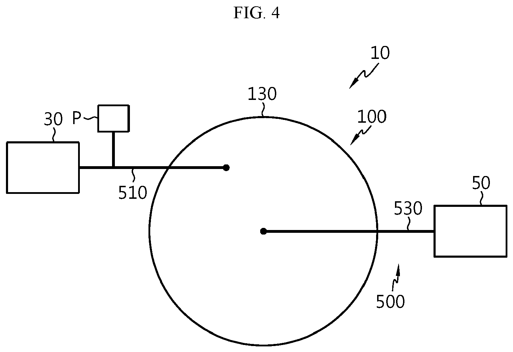

FIG. 1 is a diagram showing a slurry filtering device 10 according to an embodiment of the present disclosure, FIG. 2 is a projection of the slurry filtering device 10 of FIG. 1, FIG. 3 is a top view of the slurry filtering device 10 of FIG. 2, and FIG. 4 is a bottom view of the slurry filtering device 10 of FIG. 2.

Referring to FIGS. 1 to 4, the slurry filtering device 10 according to an embodiment of the present disclosure may include a housing 100, a filter 300 and a slurry transport line 500.

The housing 100 may include a slurry accommodation portion 110. In an example, the housing 100 may be cylindrical in shape, but the shape is not limited thereto.

A slurry (not shown) may be supplied to the slurry accommodation portion 110. The slurry may be a coating material that is applied to a substrate. In an example, the substrate may be a separator that constitutes a part of an electrode assembly of a secondary battery. However, the present disclosure is not limited to the coating of the slurry on the separator.

The slurry accommodation portion 110 may form a plurality of divided spaces. The slurry may be supplied to the plurality of divided spaces in a sequential order. Additionally, the plurality of divided spaces may be independent of each other.

The filter 300 may be received in each of the plurality of divided spaces, and configured to filter at least some of particles in the slurry. In an embodiment, the filter 300 may be a cylindrical cartridge filter, but is not limited thereto.

The filter 300 may have at least one pore H on the surface thereof. Additionally, the slurry may be fed into the filter 300 through the pore H.

Specifically, the slurry supplied to the divided spaces of the slurry accommodation portion 110 may be fed into the filter 300 through the pore H. Additionally, the slurry may include impurities and macroparticles.

In this instance, the filter 300 may remove the impurities and macroparticles from the slurry. Specifically, the impurities and macroparticles in the slurry may remain in the filter 300 after they pass through the pore H. To this end, the filter 300 may have a filtering material (not shown) of nanofibers therein.

Additionally, the filter 300 may have an outlet (not shown) through which the filtered slurry exits. In an example, the outlet may be formed in at least one of an upper side or a lower side of the filter 300.

The filter 300 may be configured to filter all or some of the particles in the slurry according to the characteristics of the substrate. In an example, in case that the coating of the substrate is required to include impurities and macroparticles, the filter 300 may be configured to filter only some of the particles in the slurry.

The slurry transport line 500 may be connected to a slurry supply portion 30 to receive the slurry and may be used to discharge the slurry filtered through the slurry filtering device 10 to a slurry discharge container 50. In this instance, the slurry may be supplied from the slurry supply portion 30 to the slurry transport line 500 by a pumping force of a supply pump P. Additionally, the slurry supply portion 30 and the slurry discharge container 50 may be equipped in a form of a pressure tank.

More details of the slurry transport line 500 will be given in the following related description.

The slurry transport line 500 may connect the plurality of divided spaces. Additionally, the slurry transport line 500 may be configured to supply the slurry to each divided space in a sequential order.

Specifically, the filter 300 may be received in each of the plurality of divided spaces, and the slurry transport line 500 may be configured to supply the slurry to each divided space in a sequential order to allow the filter 300 in each divided space to filter the slurry.

That is, the filters 300 received in the plurality of divided spaces may be connected in series by the slurry transport line 500 to filter the slurry in a sequential order. In this instance, the outlets of the filters 300 may be connected to the slurry transport line 500.

According to the exemplary configuration of the present disclosure, since the plurality of filters 300 is received in the independent spaces within the limited space, and each filter 300 is connected in series to filter the slurry in a sequential order, it may be possible to increase the slurry filtering time and improve the slurry filtering efficiency.

Hereinafter, the housing 100, the filter 300 and the slurry transport line 500 will be described in more detail.

Referring to FIGS. 1 to 4 again, the plurality of divided spaces may be hermetically separated by a plurality of partitions S.

Accordingly, it may be possible to prevent the slurry supplied to one divided space from entering the adjacent other divided space without filtering by the filter 300.

Additionally, since each filter 300 is received in the independent space by the plurality of partitions S, it may be possible to filter the slurry in a sequential order.

The housing 100 may further include a slurry transport line accommodation portion 130.

The slurry transport line accommodation portion 130 may be disposed on a side (for example, a lower side) of the slurry accommodation portion 110, and configured to receive the slurry transport line 500 in a space that is separated from the slurry accommodation portion 110. In this instance, the slurry transport line accommodation portion 130 may be an empty space to easily accommodate the slurry transport line 500.

Accordingly, since the slurry transport line 500 and the filters 300 may be disposed in each independent space, it may be possible to prevent a decrease in slurry filtering effect caused by interferences of the slurry transport line 500 and the filters 300.

Referring to FIGS. 1 to 4 again, the divided space of the slurry accommodation portion 110 at the exit of the slurry transport line 500 is surrounded by the other divided spaces of the slurry accommodation portion 110.

According to the exemplary configuration of the present disclosure, in the structure in which the slurry is sequentially supplied to each divided space accommodating the filter 300, the divided space arrangement of the slurry accommodation portion 110 as described above may make it possible to apply the plurality of filters 300 in the limited space and form a more compact structure.

In particular, the divided space of the slurry accommodation portion 110 at the exit of the slurry transport line 500 may be disposed at the center of the slurry accommodation portion 110.

In an example, as shown in FIGS. 1 to 4, in case that the cross section of the housing 100 in the horizontal plane is circular in shape, the divided space of the slurry accommodation portion 110 at the exit of the slurry transport line 500 may be cylindrical in shape. In this instance, the divided space of the slurry accommodation portion 110 in cylindrical shape may be surrounded by the other divided spaces of the slurry accommodation portion 110 while being in close contact with the other divided spaces of the slurry accommodation portion 110.

According to the exemplary configuration of the present disclosure, since the exit of the slurry accommodation portion 110 may be disposed at the center of the slurry accommodation portion 110, it may be possible to reduce the size of the housing 100 for more compact design.

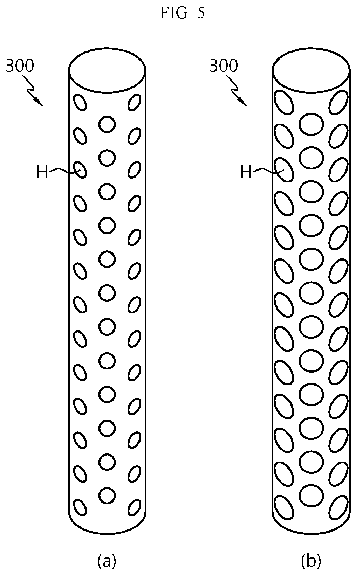

FIG. 5 is a diagram exemplarily showing the filter 300 of the slurry filtering device 10 of FIG. 2. In this instance, FIG. 5(a) is a diagram showing the filter 300 at the exit of the slurry transport line 500, and FIG. 5(b) is a diagram showing the filter 300 at the entrance of the slurry transport line 500.

Referring to FIGS. 1 to 5, the slurry transport line 500 may be configured to supply the slurry to each divided space of the slurry accommodation portion 110 in a sequential order.

In this instance, as the pores H of the filters 300 are larger in size, it may be possible to remove the macroparticles in the slurry more effectively, but the pores H of the filters 300 may be frequently clogged by the macroparticles, resulting in short replacement intervals of the filters 300.

In an embodiment of the present disclosure, the plurality of filters 300 may have different pore H sizes.

As described above, since each filter 300 is connected in series and the slurry is supplied to each divided space and each filter 300 in a sequential order, different pore H sizes of the filters 300 do not greatly affect the time required to filter the slurry and the slurry filtering efficiency.

When the plurality of filters 300 is configured to have different pore H sizes, it may be possible to improve the durability of the filter 300.

As described above, the slurry may be supplied to the slurry transport line 500 by the pumping force of the supply pump P. Accordingly, the slurry supply pressure may decrease as it goes from the divided space at the entrance of the slurry transport line 500 to the divided space at the exit of the slurry transport line 500.

That is, the supply pressure of the slurry supplied to the divided space at the entrance of the slurry transport line 500 may be highest. Additionally, the supply pressure of the slurry supplied to the divided space at the exit of the slurry transport line 500 may be lowest.

In an embodiment of the present disclosure, the pore H size of the plurality of filters 300 may change as it goes from the entrance of the slurry transport line 500 to the exit of the slurry transport line 500.

More specifically, the pore H size of the plurality of filters 300 may decrease from the entrance of the slurry transport line 500 to the exit of the slurry transport line 500.

That is, as shown in FIG. 5(a), the pore H size of the filter 300 at the exit of the slurry transport line 500 may be smallest. Additionally, as shown in FIG. 5(b), the pore H size of the filter 300 at the entrance of the slurry transport line 500 may be largest.

According to the exemplary configuration of the present disclosure, it may be possible to filter the macroparticles in the slurry by the filter 300 in the divided space of the slurry accommodation portion 110 at the entrance of the slurry transport line 500 having the highest slurry supply pressure. Additionally, the filters 300 may be configured to filter smaller particles in the slurry in a sequential order toward the divided space of the slurry accommodation portion 110 at the exit of the slurry transport line 500.

Additionally, since the pore H size of the remaining filter 300 except the filter 300 at the entrance of the slurry transport line 500 is smaller, it may be possible to improve the durability of the filter 300 and reduce the time required to replace the filter 300.

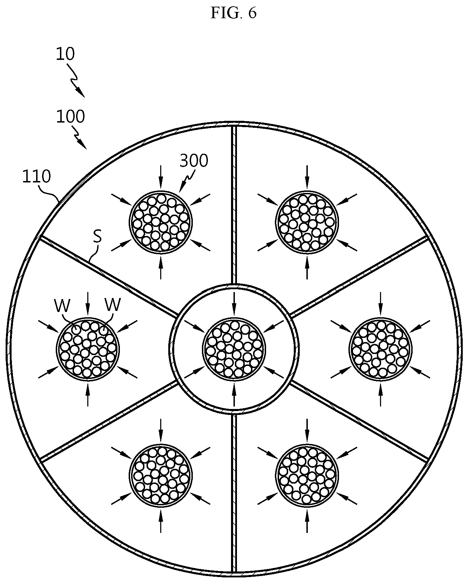

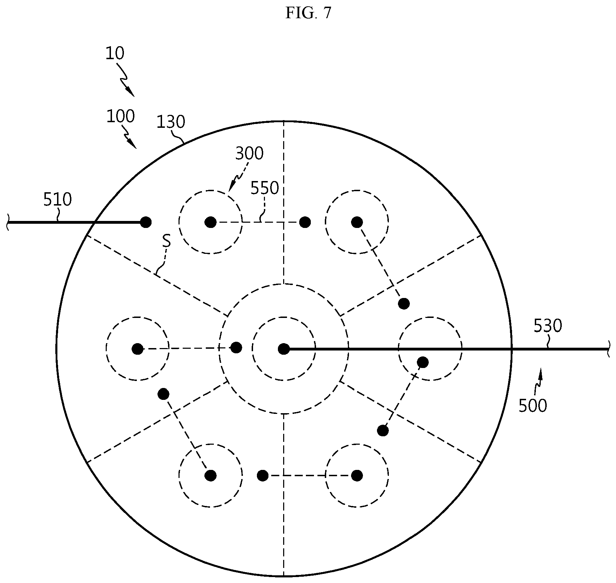

FIG. 6 is a diagram schematically showing slurry filtering in the slurry filtering device 10 of FIG. 2 (specifically, FIG. 6 is a cross-sectional view of FIG. 2, taken along the line A-A'), and FIG. 7 is a diagram showing a slurry flow pathway in the slurry filtering device 10 of FIG. 2 (specifically, FIG. 7 is a projection of the slurry filtering device 10, when viewed from the bottom of FIG. 2). In this instance, the particles in the slurry filtered through the filters 300 may be indicated by 'W' in FIG. 6 by way of illustration.

Referring to FIGS. 1 to 7, the slurry transport line 500 may include an entrance line 510, an exit line 530 and a connection line 550.

The entrance line 510 may be configured to connect the slurry supply portion 30 to the divided space of the slurry accommodation portion 110 at the entrance of the slurry transport line 500.

In this instance, the supply pump P may be connected to the entrance line 510, and the slurry may be supplied from the slurry supply portion 30 to the entrance line 510 by the pumping force of the supply pump P.

The exit line 530 may be configured to connect the slurry discharge container 50 to the filter 300 at the exit of the slurry transport line 500.

The connection line 550 may be disposed in the slurry transport line accommodation portion 130 and configured to connect the plurality of divided spaces.

As shown in FIGS. 6 and 7, since the connection line 550 connecting each divided space is disposed in the space that is separated from the slurry accommodation portion 110, it may be possible to prevent a decrease in slurry filtering effect caused by interferences of the connection line 550 and the filters 300.

The connection line 550 may be configured to connect the filter 300 received in one divided space to a side (for example, a lower side) of the adjacent other divided space. In this instance, the connection line 550 may be connected to the outlets of the filters 300.

Specifically, referring to FIGS. 6 and 7, the slurry fed into the first divided space through the entrance line 510 may be filtered through the first filter 300 received in the first divided space. In this instance, the particles in the slurry may be filtered by the filters 300 as shown in FIG. 6.

Subsequently, the slurry filtered through the first filter 300 may be supplied to the side of the adjacent other divided space through the first connection line 550.

The connection line 550 may connect the filter 300 received in one divided space to the side of the adjacent other divided space. Accordingly, it may be possible to easily filter the slurry in a sequential order through the filters 300 received in the divided spaces.

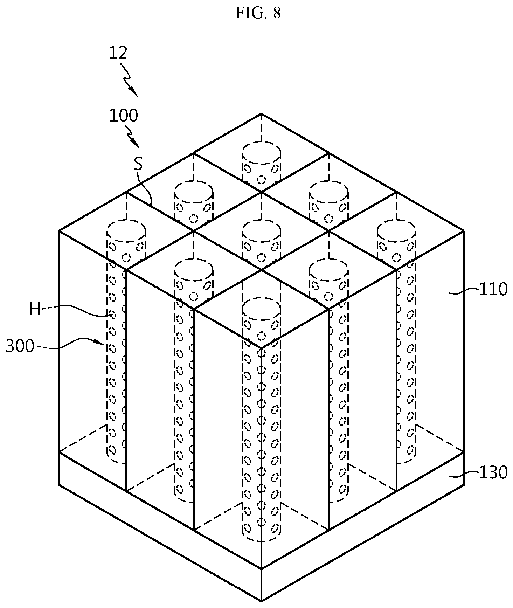

FIG. 8 is a diagram showing a slurry filtering device 12 according to another embodiment of the present disclosure.

Referring to FIG. 8, the slurry filtering device 12 according to another embodiment of the present disclosure is shown. The slurry filtering device 12 according to this embodiment is similar to the slurry filtering device 10 of the previous embodiment, and the redundant description of substantially the identical or similar components to the previous embodiment is omitted, and the following description is made based on difference(s) between this embodiment and the previous embodiment.

Referring to FIG. 8, the slurry filtering device 12 may include the housing 100.

The housing 100 of the slurry filtering device 12 according to this embodiment may have a polygonal cross section, not a circular cross section, in the horizontal plane.

In an example, the cross section of the slurry filtering device 12 in the horizontal plane may be square-shaped as shown in FIG. 8.

The slurry filtering device 12 according to this embodiment may include the housing 100 in more diverse shapes depending on the working environment. That is, it may be possible to place a larger number of filters 300 in the housing 100 that may be configured in more diverse shapes of horizontal cross section when the working environment space is more available.

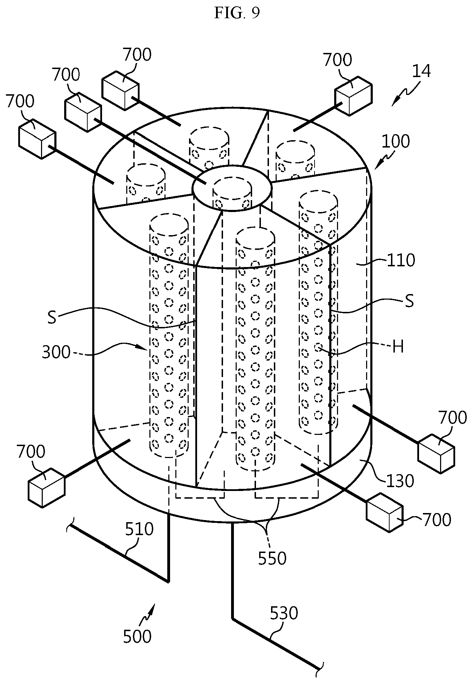

FIG. 9 is a diagram showing a slurry filtering device 14 according to still another embodiment of the present disclosure.

Referring to FIG. 9, the slurry filtering device 14 according to still another embodiment of the present disclosure is shown. The slurry filtering device 14 according to this embodiment is similar to the slurry filtering device 10 of the previous embodiment, and the redundant description of substantially the identical or similar components to the previous embodiment is omitted, and the following description is made based on difference(s) between this embodiment and the previous embodiment.

Referring to FIG. 9, the slurry filtering device 14 may include a pressure adjustment portion 700.

In the slurry filtering device 14 according to this embodiment, the pressure adjustment portion 700 may be configured to individually adjust the pressure in the plurality of divided spaces of the slurry accommodation portion 110. In an example, the pressure adjustment portion 700 may be a vacuum pump, but is not limited thereto.

The pressure adjustment portion 700 may be individually connected to each divided space. Accordingly, it may be possible to change the filtering efficiency of the filter 300 in each divided space.

The slurry filtering device 14 according to this embodiment may easily adjust the filtering efficiency of the filter 300 in each divided space as per a user's request.

As described above, according to an embodiment of the present disclosure, since the plurality of filters 300 is received in the independent spaces within the limited space, and each filter 300 is connected in series to filter the slurry in a sequential order, it may be possible to increase the slurry filtering time and improve the slurry filtering efficiency.

While the present disclosure has been hereinabove described with regard to a limited number of embodiments and drawings, the present disclosure is not limited thereto and it is obvious to those skilled in the art that a variety of modifications and changes may be made thereto within the scope of the appended claims.

The terms indicating directions such as upper, lower, left, right, front and rear are used for convenience of description, but it is obvious to those skilled in the art that the terms may change depending on the position of the stated element or an observer.

### [Description of Reference Numerals]

10, 12, 14: Slurry filtering device
30: Slurry supply portion
P: Supply pump
50: Slurry discharge container
100: Housing
110: Slurry accommodation portion
S: Partition
130: Slurry transport line accommodation portion
300: Filter
H: Pore
500: Slurry transport line
510: Entrance line
530: Exit line
550: Connection line
700: Pressure adjustment portion

## Claims

1. A slurry filtering device (10, 12, 14), comprising:
a housing (100) including a slurry accommodation portion (110) inside to which a slurry is supplied;
a plurality of filters (300) received respectively in a plurality of divided spaces of the slurry accommodation portion (110), and configured to filter at least some of particles in the slurry; and
a slurry transport line (500) connecting the plurality of divided spaces to supply the slurry to each divided space in a sequential order,
**characterized in that**:
a divided space of the slurry accommodation portion (110) at an exit of the slurry transport line (500) is surrounded by the other divided spaces of the slurry accommodation portion (110),
wherein the divided space of the slurry accommodation portion (110) at the exit of the slurry transport line (500) is disposed at a center of the slurry accommodation portion (110).

2. The slurry filtering device (10, 12, 14) according to claim 1, wherein the plurality of divided spaces is hermetically separated by a plurality of partitions (S).

3. The slurry filtering device (10, 12, 14) according to claim 1 or 2, wherein the housing (100) further includes a slurry transport line accommodation portion (130) at a side of the slurry accommodation portion (110), the slurry transport line accommodation portion (130) accommodating the slurry transport line (500) in a space that is separated from the slurry accommodation portion (110).

4. The slurry filtering device (10, 12, 14) according to any one of claims 1-3, wherein the plurality of filters (300) has different pore sizes.

5. The slurry filtering device (10, 12, 14) according to claim 4, wherein the pore size of the plurality of filters (300) decreases as it goes from an entrance of the slurry transport line (500) to an exit of the slurry transport line (500).

6. The slurry filtering device (10, 12, 14) according to claim 3, wherein the slurry transport line (500) includes:
an entrance line (510) connecting a slurry supply portion (30) to the divided space of the slurry accommodation portion (110) at an entrance of the slurry transport line (500);
an exit line (530) connecting a slurry discharge container (50) to the filter (300) at an exit of the slurry transport line (500); and
a connection line (550) disposed in the slurry transport line accommodation portion (130), the connection line (550) connecting the plurality of divided spaces.

7. The slurry filtering device (10, 12, 14) according to claim 6, wherein the connection line (550) is configured to connect the filter (300) received in one divided space to a side of the adjacent other divided space.

8. The slurry filtering device (10, 12, 14) according to any one of claims 1-7, further comprising:
a pressure adjustment portion (700) configured to individually adjust a pressure in the plurality of divided spaces.

## Patentansprüche

1. Schlammfiltervorrichtung (10, 12, 14), umfassend:
ein Gehäuse (100), das einen Schlammaufnahmeabschnitt (110) im Inneren einschließt, dem ein Schlamm zugeführt wird;
eine Vielzahl von Filtern (300), die jeweils in einem entsprechenden Teilraum der Vielzahl von Teilräumen des Schlammaufnahmeabschnitts (110) aufgenommen ist und ausgebildet ist, zumindest einige der Partikel in dem Schlamm zu filtern; und
eine Schlammtransportleitung (500), die die Vielzahl von Teilräumen verbindet, um den Schlamm jedem Teilraum in einer sequentiellen Reihenfolge zuzuführen,
**dadurch gekennzeichnet, dass**:
ein Teilraum des Schlammaufnahmeabschnitts (110) am Austritt der Schlammtransportleitung (500) von den anderen Teilräumen des Schlammaufnahmeabschnitts (110) umgeben ist,
wobei der Teilraum des Schlammaufnahmeabschnitts (110) am Austritt der Schlammtransportleitung (500) in einem Zentrum des Schlammaufnahmeabschnitts (110) angeordnet ist.

2. Schlammfiltervorrichtung (10, 12, 14) nach Anspruch 1, wobei die Vielzahl von Teilräumen durch eine Vielzahl von Trennwänden (S) hermetisch voneinander getrennt ist.

3. Schlammfiltervorrichtung (10, 12, 14) nach Anspruch 1 oder 2, wobei das Gehäuse (100) weiter einen Aufnahmeabschnitt (130) für die Schlammtransportleitung an einer Seite des Schlammaufnahmeabschnitts (110) einschließt, wobei der Aufnahmeabschnitt (130) für die Schlammtransportleitung die Schlammtransportleitung (500) in einem Raum aufnimmt, der von dem Schlammaufnahmeabschnitt (110) getrennt ist.

4. Schlammfiltervorrichtung (10, 12, 14) nach einem der Ansprüche 1-3, wobei die Vielzahl von Filtern (300) unterschiedliche Porengrößen aufweist.

5. Schlammfiltervorrichtung (10, 12, 14) nach Anspruch 4, wobei die Porengröße der Vielzahl von Filtern (300) abnimmt, wenn vom Eintritt der Schlammtransportleitung (500) zum Austritt der Schlammtransportleitung (500) fortgeschritten wird.

6. Schlammfiltervorrichtung (10, 12, 14) nach Anspruch 3, wobei die Schlammtransportleitung (500) einschließt:
eine Einlassleitung (510), die einen Schlammzufuhrabschnitt (30) mit dem Teilraum des Schlammaufnahmeabschnitts (110) am Eintritt der Schlammtransportleitung (500) verbindet;
eine Auslassleitung (530), die einen Schlammaustragsbehälter (50) mit dem Filter (300) am Austritt der Schlammtransportleitung (500) verbindet; und
eine Verbindungsleitung (550), die in dem Aufnahmeabschnitt (130) für die Schlammtransportleitung angeordnet ist, wobei die Verbindungsleitung (550) die Vielzahl von Teilräumen verbindet.

7. Schlammfiltervorrichtung (10, 12, 14) nach Anspruch 6, wobei die Verbindungsleitung (550) ausgebildet ist, den in einem Teilraum aufgenommenen Filter (300) mit einer Seite des benachbarten anderen Teilraums zu verbinden.

8. Schlammfiltervorrichtung (10, 12, 14) nach einem der Ansprüche 1-7, weiter umfassend:
einen Druckeinstellabschnitt (700), der ausgebildet ist, einen Druck in der Vielzahl von Teilräumen individuell einzustellen.

## Revendications

1. Dispositif (10, 12, 14) de filtration de suspension, comprenant :
un boîtier (100) incluant une partie (110) de logement de suspension dans laquelle une suspension est fournie ;
une pluralité de filtres (300) reçus respectivement dans une pluralité d'espaces divisés de la partie (110) de logement de suspension, et configurés pour filtrer au moins certaines des particules dans la suspension ; et
une ligne (500) de transfert de suspension reliant la pluralité d'espaces divisés pour fournir la suspension à chaque espace divisé dans un ordre séquentiel, **caractérisé en ce que** :
un espace divisé de la partie (110) de logement de suspension à une sortie de la ligne (500) de transfert de suspension est entouré par les autres espaces divisés de la partie (110) de logement de suspension,
dans lequel l'espace divisé de la partie (110) de logement de suspension à la sortie de la ligne (500) de transfert de suspension est disposé à un centre de la partie (110) de logement de suspension.

2. Dispositif (10, 12, 14) de filtration de suspension selon la revendication 1, dans lequel la pluralité d'espaces divisés est séparée de manière hermétique par une pluralité de cloisons (S).

3. Dispositif (10, 12, 14) de filtration de suspension selon la revendication 1 ou la revendication 2, dans lequel le boîtier (100) inclut en outre une partie (130) de logement de la ligne de transfert de suspension sur un côté de la partie (110) de logement de suspension, la partie (130) de logement de la ligne de transfert de suspension logeant la ligne (500) de transfert de suspension dans un espace qui est séparé de la partie (110) de logement de suspension.

4. Dispositif (10, 12, 14) de filtration de suspension selon l'une quelconque des revendications 1 à 3, dans lequel la pluralité de filtres (300) présente des tailles de pore différentes.

5. Dispositif (10, 12, 14) de filtration de suspension selon la revendication 4, dans lequel la taille de pore de la pluralité de filtres (300) diminue à mesure qu'elle va de l'entrée de la ligne (500) de transfert de suspension à la sortie de la ligne (500) de transfert de suspension.

6. Dispositif (10, 12, 14) de filtration de suspension selon la revendication 3, dans lequel la ligne (500) de transfert de suspension inclut :
une ligne d'entrée (510) reliant une partie (30) d'alimentation en suspension à l'espace divisé de la partie (110) de logement de suspension à l'entrée de la ligne (500) de transfert de suspension ;
une ligne (530) de sortie reliant un récipient (50) d'évacuation de suspension au filtre (300) à la sortie de la ligne (500) de transfert de suspension ; et
une ligne de raccordement (550) disposée dans la partie (130) de logement de la ligne de transfert de suspension, la ligne de raccordement (550) reliant la pluralité d'espaces divisés.

7. Dispositif (10, 12, 14) de filtration de suspension selon la revendication 6, dans lequel la ligne de raccordement (550) est configurée pour relier le filtre (300) reçu dans un espace divisé à un côté de l'autre espace divisé adjacent.

8. Dispositif (10, 12, 14) de filtration de suspension selon l'une quelconque des revendications 1 à 7,
comprenant en outre :
une partie (700) de réglage de pression configurée pour régler individuellement une pression dans la pluralité d'espaces divisés.
